# EUROPEAN PATENT APPLICATION

(11) **EP 3 613 631 A1**
(43) Date of publication of application: **26.02.2020**
(21) Application number: 19192379.6
(22) Date of filing: 19.08.2019
(51) Int. Cl.: B60N 2/879, B60R 11/02, H04R 5/02

(54) **VEHICLE HEADREST WITH BLUETOOTH SPEAKERS**

(30) Priority: 20.08.2018 US 201862719873 P
(71) Applicant: Windsor Machine and Stamping 2009 Ltd, Windsor, Ontario N9H 2N2 (CA)
(72) Inventor: Hunt, David James, Windsor, Ontario N9A 2N2 (CA)
(74) Representative: Manitz Finsterwald Patent- und Rechtsanwaltspartnerschaft mbB

(57) **Abstract**

A vehicle headrest assembly (10) including a Bluetooth speaker (16) for connecting to a vehicle occupant's mobile device. The vehicle headrest assembly includes a housing (11) operatively coupleable to a vehicle seatback and a cover at least partially surrounding the housing. The cover (12) can completely enclose the Bluetooth speaker or may alternatively provide cover apertures (18) that the Bluetooth speaker is disposed in. The headrest assembly further includes an armature permitting the housing to move vertically with respect to the vehicle seatback. A vehicle with multiple seats can employ multiple vehicle headrest assemblies to allow occupants to personalize their audio preferences.

## Description

### CROSS-REFERENCE TO RELATED APPLICATION

This U.S. Patent Application claims the benefit of and priority to U.S. Provisional Patent Application Serial No. 62/719,873, filed on August 20, 2018, titled "Vehicle Headrest with Bluetooth Speakers," the entire disclosure of which is hereby incorporated by reference.

### BACKGROUND OF THE INVENTION

### 1. Field of the Invention

The present invention relates to vehicle headrests and, more particularly, to a vehicle headrest with Bluetooth speakers incorporated therewith.

### 2. Related Art

This section provides background information related to the present disclosure which is not necessarily prior art.

Technological improvements of vehicles have generally been focused on enhancements to features including efficiency, safety, and comfort. In a race to improve these features, matters of technological conveniences are often overlooked. These technological conveniences not only make an occupant's travel experience more enjoyable, they tangentially result in improvements to efficiency, safety, and comfort. More specifically, a more enjoyable travel experience results in longer periods of driving between stops and can also encourage less movement of occupants during travel, particularly children.

One example feature of a vehicle that has historically been employed only for safety and comfort is a headrest. Most vehicles include headrests atop an occupant's seat and in a position adjacent the occupant's head. Headrests are typically cushioned for comfort and most are commonly finished in the same material as the rest of the seat. For the most part, a headrest is not shared among occupants and can be adjusted in one or more positions for a specific body size and comfort preference. Because accommodating user preferences have historically been limited to adjusting the position of the headrest, there is a continuing desire to provide additional functionality to the headrest and provide an occupant more options to improve and personalize their travel experience.

### SUMMARY OF THE INVENTION

This section provides a general summary of the disclosure and is not to be interpreted as a complete and comprehensive listing of all of the objects, aspects, features and advantages associated with the present disclosure.

According to one aspect of the disclosure, a vehicle headrest assembly for a vehicle is provided. The vehicle headrest assembly comprises a housing operatively coupleable to a vehicle seatback. A cover at least partially surrounds the housing and at least one Bluetooth speaker is at least partially located within the housing for connecting to vehicle occupant's mobile device.

According to another aspect of the disclosure, a vehicle headrest assembly for a vehicle is provided. The headrest assembly includes a housing operatively coupleable to a vehicle seatback and having a first electrical contact in electrical contact with a source of power. The headrest assembly also includes a shell for selective and repeatable attachment to the housing and at least partially enclosing a Bluetooth speaker. The shell includes a second electrical contact for drawing power from the first electrical contact when the shell is attached to the housing.

According to another aspect of the disclosure, a vehicle including a plurality of passenger seats that each include a headrest assembly is provided. Each of the headrest assemblies comprise a housing, a cover at least partially surrounding the housing, and at least one Bluetooth speaker at least partially located within the housing for connecting to vehicle occupant's mobile device.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1 is a perspective view of a headrest assembly having Bluetooth speakers disposed therein;
Figure 2 is a perspective view of the headrest assembly in accordance with another aspect of the disclosure;
Figure 3 is a perspective view of the headrest assembly illustrating the Bluetooth speakers and associated components;
Figure 4 is a schematic view of a Bluetooth assembly circuit used in conjunction with the headrest assembly;
Figure 5 is a perspective view of the headrest assembly in accordance with yet another aspect of the subject disclosure and includes a shell with a Bluetooth speaker attached to the headrest;
Figure 6 is a perspective view of the headrest assembly and illustrates the shell detached from the headrest; and
Figure 7 is a rear perspective view of the headrest assembly and illustrates the shell detached from the headrest.

### DESCRIPTION OF THE ENABLING EMBODIMENTS

Example embodiments will now be described more fully with reference to the accompanying drawings. In general, the subject embodiments are directed to a headrest assembly having Bluetooth speakers disposed therein. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the headrest assembly is intended for providing an enhanced travel experience to occupants of a vehicle by accommodating audio preferences specific to an occupant without interfering with the preferences of other occupants in nearby seats.

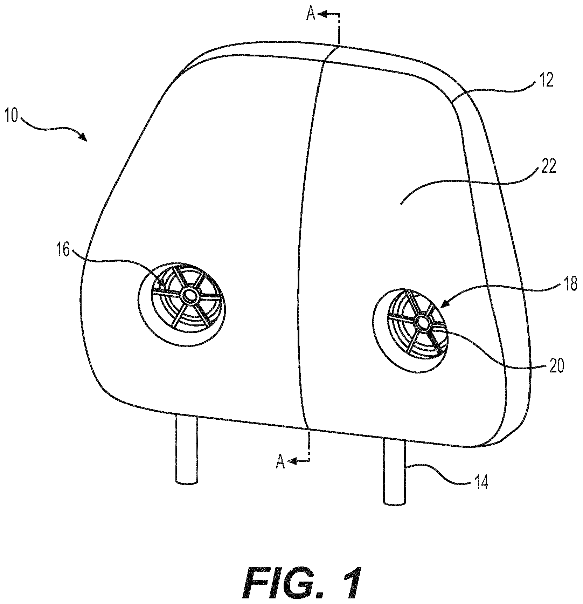

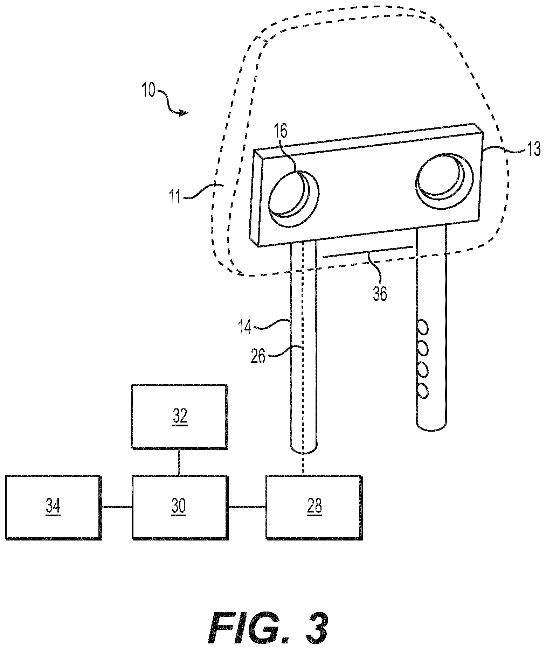

With initial reference to Figure 1, a headrest assembly is depicted. The headrest assembly is generally referred to with numeral 10. The headrest assembly 10 includes a housing 11 (Figure 3) that at least partially encloses several components associated with stabilization and/or adjustment of the headrest assembly. The housing 11 may include a cushion, support webbing, exterior shell, and other components. A cover 12 is provided over the housing 11 for aesthetic purposes and additional occupant comfort. The housing is 11 operatively coupleable to a vehicle seatback, such that it can be one integral piece or adjustable. For example, the headrest assembly may include a base portion 14 (which may also be referred to as an "armature") that is mountable to a vehicle seat and, more specifically, to the upper portion of the seatback of the vehicle seat. The armature 14 may permit the housing to move vertically, horizontally, or tilt with respect to the vehicle seatback.

The embodiments of the headrest assembly 10 disclosed herein include at least one Bluetooth speaker 16. While a single Bluetooth speaker is contemplated, a plurality of Bluetooth speakers may be also employed. As such, although two Bluetooth speakers are illustrated, it is to be understood that more or fewer Bluetooth speakers may be included in various embodiments. When two or more Bluetooth speakers 16 are employed, they are located in a symmetrical pattern so as to output audio to each ear equally in some embodiments. For example, Figure 1 illustrates two Bluetooth speakers 16 located symmetrically with respect to a vertical centerline "A" of the headrest assembly 10. The Bluetooth speaker(s) 16 may be visible from the exterior of the cover 12 in some embodiments, as is the case with Figure 1. In such embodiments, a portion of each of the Bluetooth speaker(s) 16 may be disposed within a respective cover aperture 18. The most forward point or surface 20 of the Bluetooth speaker 16 may protrude out of the cover aperture 18 to protrude from a forward surface 22 of the cover 12. Alternatively, the most forward surface 20 of the Bluetooth speaker 16 may be flush with the forward surface 22 of the cover 12 or recessed within the cover aperture 12 to be recessed from the forward surface 22 of the cover 12.

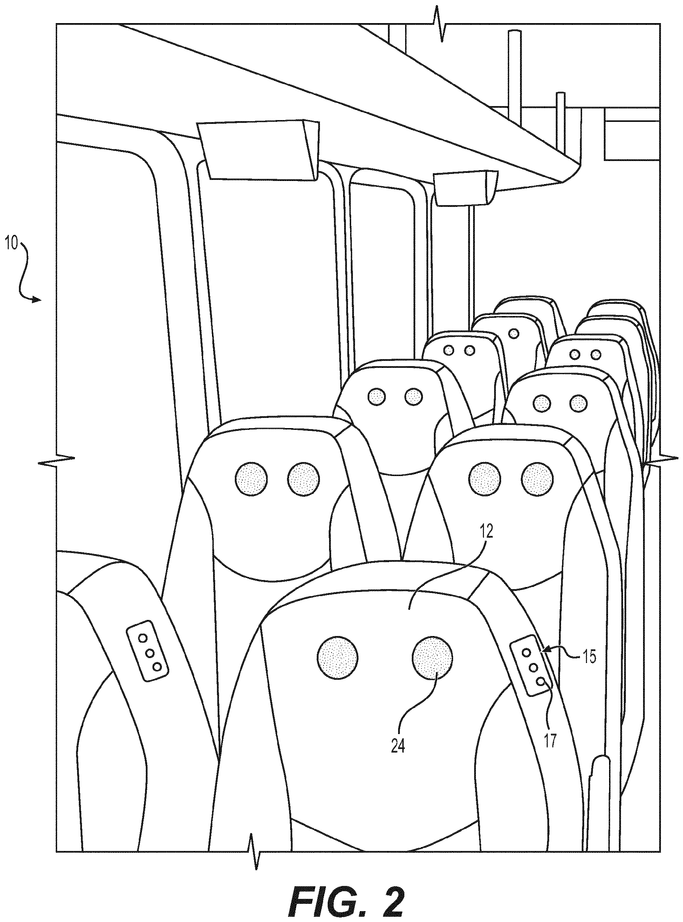

An alternative arrangement is shown in Figure 2, wherein the Bluetooth speakers 16 are recessed into the cushion and covered such that they cannot be seen. The Bluetooth speakers 16 may be enclosed within the cover 12 or may be covered with a speaker sheath 24 with a material known to allow the transmission of sound without interference, for example, a stretchable nylon material. As such, the speaker sheath 24 may be a different material than the cover 12, for example, the cover 12 may be leather and the speaker sheath 24 may be stretchable nylon. The speaker sheath 24 may also include material that is water resistant such as a fabric laminated or coated in rubber, polyurethane, silicone elastomer, etc. The speaker sheath 24 may be integral with the cover 12 or separate. Figure 2 illustrates one example application of the subject headrest assembly 10 in a public transport vehicle. Turning on, pairing to, and other additional controls of the Bluetooth Speakers 16 may be controlled via a user interface 15 that includes a plurality of buttons 17. For example, the buttons 17 can include an on/off button, a pairing button, and volume buttons. The user interface 15 may further include an LED to indicate the status of the Bluetooth speakers 16, e.g., whether or not they have been successfully paired.

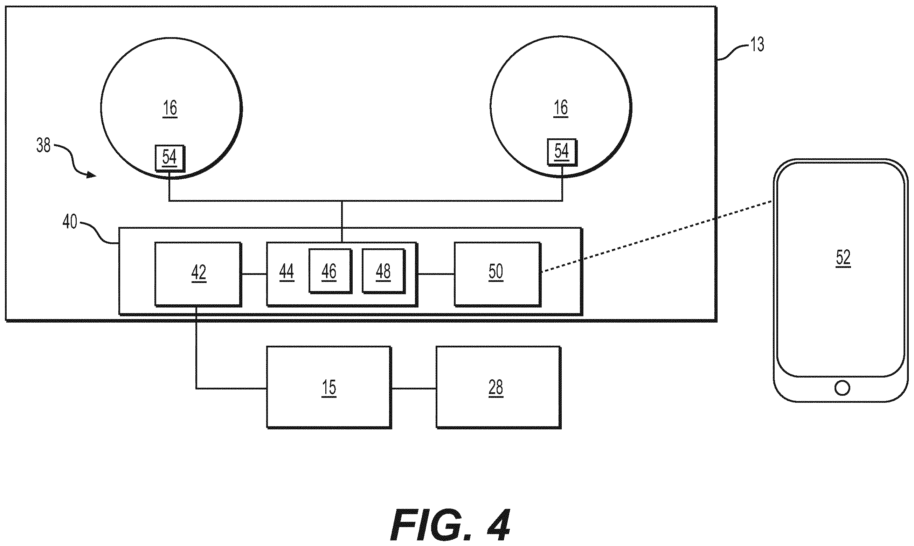

Figure 3 illustrates the Bluetooth speakers 16 and an associated envelope 13 embedded within the headrest. The envelope 13 encloses and protects the various components (Figure 4) associated with the Bluetooth Speakers 16. The envelope 13 can be constructed of hard plastic, a semi-flexible material that allows some deformability, or a flexible material such as rubber. The envelope 13 can be directly connected to the armature 14 and may also be water resistant. A power cable 26 may extend from the envelope 13, through the armature 14, to a power source 28. It should be appreciated, however, that the power source 28 may alternatively be located within cover 12 and/or housing 11. In some arrangements, the power source 28 is a battery and, more specifically, a rechargeable battery that is connected to and charged by a vehicular electrical system 30. The vehicular electrical system 30, may include one or more of a vehicle alternator 32 or a power generation system 34 such as a regenerative braking. In order to assist in the maintenance of the Bluetooth Speakers 16 and associated components, an access opening 36 may be provided within the cover 12 to provide access.

Figure 4 is a schematic view of the Bluetooth Speakers 16 and an associated Bluetooth assembly circuit 38 contained within envelope 13. The various elements provided therein allow for a specific implementation. Thus, one of ordinary skill in the art of electronics and circuits may substitute various components to achieve a similar functionality. The Bluetooth assembly circuit 38 may include a primary printed circuit board (PCB) 40. The primary PCB 40 controls certain features of the Bluetooth speakers 16 such as regulating voltage from the power source 28, amplifying audio, and Bluetooth communications. The PCB 40 includes a voltage regulator circuit 42 that supervises the amount of power being supplied to the other components. The PCB 40 also includes an audio circuit 44 that includes an audio amplifier 46 and an operational amplifier 48. The PCB 40 also includes a Bluetooth circuit 50 which may include one or more integrated circuits, modules, and antennas for the connection, transfer, and processing of data from an occupant. For example, the Bluetooth circuit 50 may connect to an occupant's wireless mobile device 52, such as a cellular phone. Secondary circuits 54 may be located in each respective Bluetooth Speaker 16 for connecting the audio line-in and PCB 40. As shown, the user interface 15 may be directly connected to the Bluetooth assembly circuit 38 and use the same power source 28.

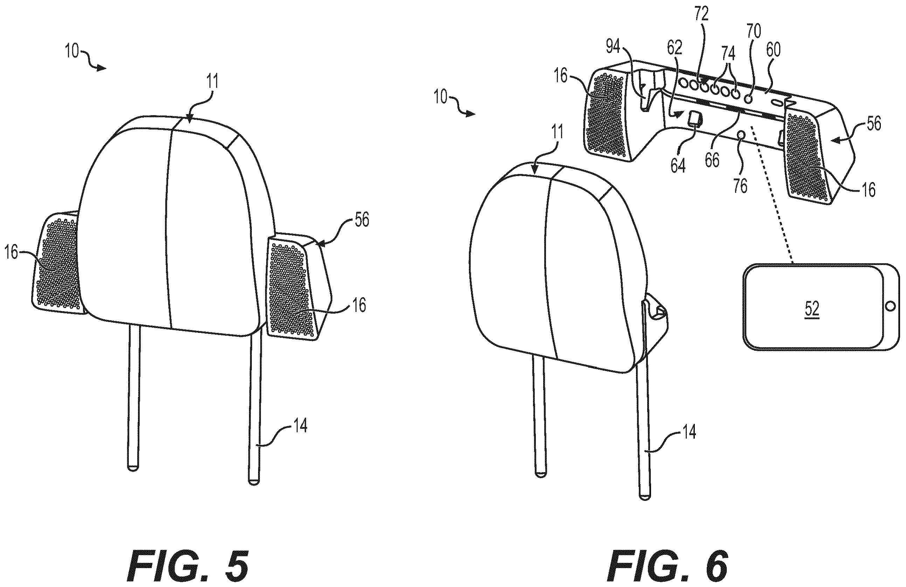

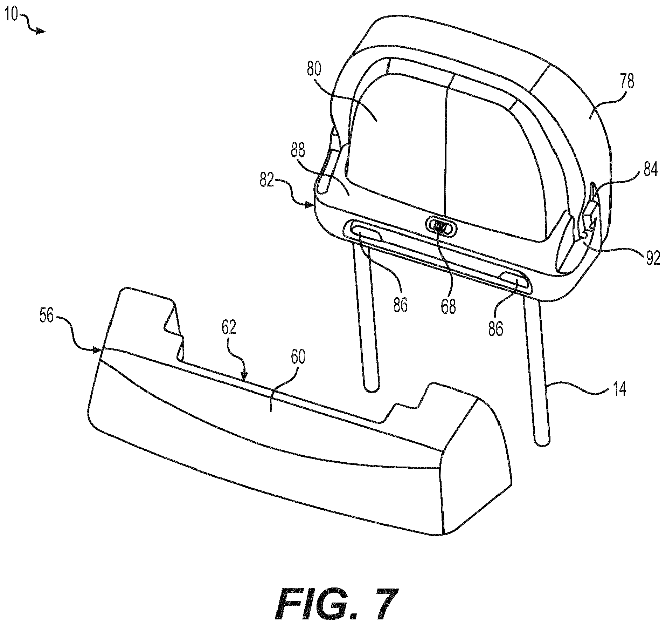

Figures 5 through 7 illustrate an alternative embodiment wherein the envelope 13 and/or the associated Bluetooth assembly circuit 38 are at least partially located in a shell 56 that is detachable from the housing 11. Referring initially to Figure 5, the headrest assembly 10 is shown with the shell 56 in an attached position on the housing 11. While not limited thereto, the shell 56 is illustrated as having a pair of speakers 16 symmetrically connected by a narrow central portion 60 defining a recess 62 that is sized to fit over a rear portion of the housing 11. Figure 6 illustrates the shell 56 in a detached position. As shown, the central portion 60 includes connection members 64 for connecting to the rear portion of the housing 11. The connection members may be clips, as illustrated, or any other suitable structural feature that couples the shell 56 to the headrest. The central portion 60 further includes a first electrical contact 66 which draws power from a second electrical contact 68 (Figure 7), when the shell 56 in the attached position. The second electrical contact 68 is connected to the source of power 28, which has been previously described.

With continued reference to Figure 6, one important aspect of the present embodiment is that the Bluetooth assembly circuit 38 may be configured to play audio even when the shell 56 is detached from the housing 11. As such, in addition to the power source 28, an additional battery (not shown) is located within the shell 56. The additional battery is rechargeable and draws current from the power source 28 during connection of the electrical contacts 66, 68. In addition, it should also be appreciated that the additional battery may be disposable and accessible within the shell 56. The shell 56 may also include a charging port 70 such that the Bluetooth assembly circuit 38 can plug into a wall outlet and play audio without reliance on the additional battery or power source 28. The charging port 70 can also be used to charge the additional battery. As such, when the shell 56 is detached from the housing 11, it operates as a fully functional Bluetooth speaker that can be paired to other electronics such as the previously described mobile devices 52. Clips 64 and/or other connection mechanisms may be arranged and/or included to physically connect mobile devices 52 to the shell 56. The central portion 60 further includes a secondary user interface 72 with a plurality of buttons 74 which may include an on/off button, a pairing button, and volume buttons. In some embodiments, the secondary user interface 72 may only be accessible when the shell 56 is detached from the housing 11. In addition, the central portion 60 may further include a direct connection port, such as a speaker jack 76 for direct connection to the mobile device 52.

In addition to transferring power, the electrical contacts 66, 68 may be further configured to transfer audio information from a vehicular audio system, such that audio choices from the vehicular audio system are relayed by the speakers 16. For example, the electrical contacts 66, 68 may form a pogo-type connection. Choices between audio inputs can be selected via the various user interfaces and/or paired devices. As such, all the headrest assemblies 10 or selected headrest assemblies 10 in a vehicle may simultaneously play audio originating from the vehicular audio system.

Figure 7 illustrates the housing 11 with a multi-piece configuration in accordance with the embodiments shown in Figure 5 and 6. More particularly, the housing 11 includes a front portion 78 and a rear portion 80. The rear portion 80 is at least partially inset into the front portion 78. The housing 11 further includes a bracket 82 that wraps around the rear portion 80 and connects to indentations 84 in the front portion 78. The bracket 82 includes receiving members 86 (grooves) for pairing with clips 64 of the shell 56. The bracket 82 further includes the second electrical contact 68 on an upward facing surface 88 of the bracket 82 and is positioned to make contact with the first electrical contact 66 upon attachment of the shell 56. The upward facing surface 88 includes retaining grooves 90 for cradling correspondingly shaped members 94 (Figure 6) of the shell 56. As such, during connection the upward facing surface 88 retains most of the weight of the shell 56.

The wireless capability of Bluetooth technology to exchange data over short distances to and from mobile devices 42 facilitates convenient use for occupants while seated in a seat with the headrest assembly 10 disclosed herein. As individuals have become increasingly reliant on mobile devices 52 such as wearable technology for audio content (e.g., music, podcasts, audio books, etc.), connectivity from relied upon mobile devices or wearable technology to the headrest assembly 10 would add enjoyment and personalization to an occupant's experience. While not limited thereto, the subject invention is particularly useful in ride sharing vehicles, transportation network company vehicles, public transport, traveling with children, and convertible-type vehicles wherein listening to music is difficult during heavy winds.

Ride sharing, specifically, is an increasingly popular carpooling option that includes one or more individuals sharing a vehicle to be transported. The headrest assembly 10 disclosed herein alleviates the need for ride sharing occupants to attempt to try to find an agreeable audio option to be played on the vehicle's main audio system, as each passenger with a mobile device or wearable technology (or other electronic devices such as tablets, laptops, etc.) has the capability to quickly and easily connect to the Bluetooth speaker(s) 16 for individual selection of audio content. Advantageously, the headrest assembly 10 equipped with Bluetooth speaker(s) 16 provides personalized and individual audio control.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A vehicle headrest assembly for a vehicle comprising:
a housing operatively coupleable to a vehicle seatback;
a cover at least partially surrounding the housing; and
at least one Bluetooth speaker at least partially located within the housing for connecting to a mobile device.

2. The vehicle headrest assembly of Claim 1, wherein the cover includes an aperture and a portion of the at least one Bluetooth speaker is located within the aperture.

3. The vehicle headrest assembly of Claim 2, wherein the at least one Bluetooth speaker is visible through the aperture of the cover.

4. The vehicle headrest assembly of Claim 2, wherein a speaker sheath covers the at least one Bluetooth speaker.

5. The vehicle headrest assembly of Claim 4, wherein the speaker sheath is constructed from a different material than the cover.

6. The vehicle headrest assembly of Claim 4, wherein the speaker sheath is constructed of a water resistant material.

7. The vehicle headrest assembly of Claim 1, wherein the at least one Bluetooth speaker is completely enclosed within the cover.

8. The vehicle headrest assembly of Claim 1, further comprising a Bluetooth assembly circuit and an envelope enclosing and protecting the Bluetooth assembly circuit.

9. The vehicle headrest assembly of Claim 8, wherein the at least one Bluetooth speaker is at least partially enclosed by the envelope.

10. The vehicle headrest assembly of Claim 9, wherein the envelope is constructed of a flexible material.

11. The vehicle headrest assembly of Claim 1, wherein the at least one Bluetooth speaker includes at least two Bluetooth speakers located symmetrically with respect to a vertical centerline of the headrest assembly.

12. The vehicle headrest assembly of Claim 1, further comprising at least one user interface having a pairing button.

13. A vehicle headrest assembly for a vehicle comprising:
a housing operatively coupleable to a vehicle seatback and having a first electrical contact in electrical contact with a source of power;
a shell for selective and repeatable attachment to the housing and at least partially enclosing a Bluetooth speaker; and
wherein the shell includes a second electrical contact for drawing power from the first electrical contact when the shell is attached to the housing.

14. The vehicle headrest assembly of Claim 13, wherein the shell at least partially encloses a pair of Bluetooth speakers symmetrically connected by a narrow central portion defining a recess that is sized to fit over a rear portion of the housing.

15. A vehicle including a plurality of passenger seats that each include a headrest assembly, each of the headrest assemblies comprising:
a housing;
a cover at least partially surrounding the housing; and
at least one Bluetooth speaker at least partially located within the housing for connecting to a mobile device.
